# EUROPEAN PATENT SPECIFICATION

(11) **EP 2 719 587 B1**
(45) Date of publication and mention of the grant of the patent: **30.09.2020**
(21) Application number: 12188588.3
(22) Date of filing: 15.10.2012
(51) Int. Cl.: B60T 7/12, B60T 13/66, B60T 17/18

(54) **Method for operating an electrically operable parking brake system and control device of an electrically operable parking brake system**
Verfahren für den Betrieb eines elektrisch betätigten Parkbremssystems und Steuervorrichtung eines elektrisch betätigten Parkbremssystems
Procédé de fonctionnement d'un système de frein de stationnement à commande électrique et dispositif de commande d'un système de frein de stationnement actionnable électriquement

(43) Date of publication of application: 16.04.2014
(73) Proprietor: KNORR-BREMSE Systeme für Nutzfahrzeuge GmbH, 80809 München (DE)
(72) Inventor: Balogh, Levente, 2319 Szigetszentmiklos (HU); Bordacs, Zoltan, 8200 Veszprém (HU)
(74) Representative: Mattusch, Gundula

(56) References cited:
- EP-A1- 2 072 359
- EP-A1- 2 308 730
- DE-A1- 10 238 870
- DE-A1-102010 055 921
- US-A1- 2003 221 922

## Description

The invention relates to a method for operating an electrically operable parking brake system of a vehicle.

The present invention further relates to a control device of an electrically operable parking brake system of a vehicle, wherein the control device is designed for implementing the method according to the invention.

Vehicles, for example, utility vehicles, generally possess a service brake used for braking during a driving operation of the vehicle and a parking brake system independent of the service brake which secures the vehicle by applying a braking force in the parked state. The service brake and the parking brake system may conceptually be referred to as the brake system of the vehicle. In modern vehicles, the service brake as well as the parking brake system are often electrically operable. Accordingly, for example, electric signals generated by operating devices are transmitted to control devices of the service brake and of the parking brake system which in turn control the operation, i.e., in particular, the release and application, of the service brake and of the parking brake system. In their respective released operating states the service brake and the parking brake system do not generate a braking force. In their respective applied operating states, the service brake and the parking brake system respectively generate a braking force. A released brake can also be referred to as "open" and an applied brake as "closed".

Usually a changeover between a phase in which mainly the service brake is operated and a phase in which mainly the parking brake system is operated takes place when starting or stopping. It is the responsibility of the driver of the vehicle to apply the parking brake system by manually operating an operating device provided for this purpose to safely place the vehicle when parking the vehicle.

Even though the application of the parking brake system is generally routinely performed by the driver, it is still an additional action to be explicitly performed by the driver which at least briefly requires his attention and may also be accidentally forgotten.

The method according to the generic part of independent claim 1 is known from US 2003/0221922 A1 and EP 2 072 359 A1.

Accordingly, the present invention is based on the object to unburden the driver and to improve the vehicle safety.

This object is solved by the features of the independent claims.

Advantageous embodiments and further developments of the invention will emerge from the dependent claims.

According to the invention, a transfer of the electrically operable parking brake system from a released operating state into an applied operating state is initiated and a predeterminable waiting time period is started when the presence of a trigger event is detected which is independent of an operating device provided for manually operating the electrically operable parking brake system and/or used to release the parking brake system when an operating device is faulty. In this way, the application of the parking brake system may be enabled independent of a manual operation of an operating device of the parking brake system. The driver may therefore knowingly skip or unintentionally forget the manual application of the parking brake system without this having a negative effect on the safety of the vehicle, for example, a vehicle parked in an unbraked state. The possibility to consciously skip the manual application of the parking brake system when parking the vehicle unburdens the driver of the vehicle and improves the comfort when operating the vehicle. The vehicle may, in particular, be or comprise a towing vehicle.

In this connection, it may be contemplated that the trigger event comprises at least one of the following events:
- ignition is turned off,
- cabin door of the vehicle is locked from the outside,
- a key is removed from the ignition lock,
- driver of the vehicle leaves the driver's seat,
- belt buckle is opened,
- engine of the vehicle is turned off from the outside,
- a gear position "neutral" or "parking" is selected
- cabin door of the vehicle is opened,
- a tachograph chart is removed from a tachograph of the vehicle,
- master switch is turned off,
- instruction to implement a levelling of the vehicle,
- the vehicle is stopped.

The above events may be part of the trigger event individually as well as in any combination. The master switch may, for example, be a manually operable switch independent from the ignition for activating or deactivating the electronics of the vehicle. The locking of the cabin door may, for example, be realised with the aid of a key and/or a remote control. Further, the deactivation of the engine from the outside may also comprise the receipt of an external signal from outside of the vehicle, for example, a signal sent to the vehicle via a remote control.

Further, it may be contemplated that it is checked whether the vehicle is standing. By checking whether the vehicle is standing, an unintentional application of the parking brake system while driving may reliably be prevented. The check may be implemented with the aid of rotational speed sensors which may, for example, be part of an antilock braking system of the service brake.

Usefully, it may be contemplated that it is checked whether the engine is running and that the electrically operable parking brake system is transferred into the applied operating state when the engine is running or stopped. In this way, the vehicle may be automatically secured by applying the parking brake system as soon as the driver stops, for example, with the aid of the service brake, while the engine is running. Alternatively, the vehicle may be automatically secured when the engine is stopped. This may unburden the driver, particularly in city traffic or in the case of a traffic jam.

It may be contemplated that the method is terminated when at least one of the following events is detected:
- detection of the velocity of the vehicle (104) is not possible,
- receipt of a external instruction to terminate the method (200),
- detection that the electrically operable parking brake system (100) is already in the applied operating state,
- receipt of an ADR main switch signal is not possible in an ADR vehicle,
- detection of a stored control parameter for deactivating the method (200).

The above-mentioned events may be used as an indicator of the termination of the method individually as well as in any combination. In this way, it may be ensured that the method yields predictable results or changes of the vehicle status only under controlled conditions. The abbreviation "ADR" may, for example, refer to the "European Agreement concerning the International Carriage of dangerous goods by road". Vehicles intended for the transport of dangerous goods may be provided with additional safety devices which, by means of an ADR signal, may indicate their operability and/or a proper state of the vehicle and/or of the transported hazardous materials.

It is contemplated that the electrically operable parking brake system is transferred into the applied operating state after the expiration of the predeterminable waiting time when the vehicle is standing and the engine is not started during the predeterminable waiting time. In this way, the parking brake system may be reliably applied when the vehicle is parked.

In this connection, it is contemplated that the predeterminable waiting time is reset and/or interrupted when the engine is started or the vehicle is rolling. By resetting the waiting time, a misinterpretation of the intended vehicle status and an uncontrolled application of the parking brake system may be prevented.

Usefully, it may be contemplated that a transfer of the electrically operable parking brake system from a released operating state into an applied operating state is initiated and that an additional predeterminable waiting time period is started when a defect of the electrically operable parking brake system is detected and a presence of a further trigger event is detected which is independent of the operating device provided for manually operating the electrically operable parking brake system. In this way, safely parking the vehicle with the parking brake system applied may be possible even in the case of a defect of the manual operating device of the parking brake system. The defect may, in particular, affect the manual operating device of the parking brake system and/or an interface connecting the operating device to a control device implementing the method. The additional predeterminable waiting time may, for example, be preset at the factory and stored as a system parameter which is modifiable during vehicle maintenance in a control device of the electrically operable parking brake system.

In this connection, it may be contemplated that the further trigger event comprises at least one of the following events:
- detecting a vehicle speed of less than a predeterminable threshold value,
- recognizing that the engine not is running,
- a gear position "neutral" or "parking" is selected
- receiving an external instruction to apply the electrically operable parking brake system,
- driver of the vehicle leaves the driver's seat.

The above-mentioned events may be part of the additional trigger event individually as well as in any combination.

It may further be contemplated that the electrically operable parking brake system is transferred into the applied operating state after the expiration of the additional predeterminable waiting time when the additional trigger event is detected between the start and the expiration of the additional predeterminable waiting time. In this way, it may be ensured that the driver of the vehicle actually intends to safely park the vehicle.

Advantageously, it may be contemplated that the electrically operable parking brake system is transferred into the applied operating state prior to an expiration of the additional predeterminable waiting time when a brake pedal of the vehicle is operated. In this way, the operation of the brake pedal allocated to the service brake may replace the manual operation of the operating device allocated to the parking brake system in the case of a defect. This may be particularly advantageous in the case that a defect of the operating device is detected

It may be contemplated that the additional predeterminable waiting time is reset and/or interrupted when an accelerator pedal of the vehicle is operated. In this way, it may be ensured that the application of the parking brake system is actually intended as the driver may also reliably interrupt the automatic application of the parking brake system in the case of a defect.

The invention will now be explained by way of example with the aid of preferred embodiment with reference to the accompanying drawings in which:
- Figure 1: shows a flow chart of a method;
- Figure 2: shows a flow chart of a modified method;
- Figure 3: shows an exemplary circuit diagram of a electrically operable parking brake system; and
- Figure 4: shows a schematic representation of a vehicle.

In the following drawings, the same numerals designate identical or equivalent parts. The trigger events, conditions, and related states mentioned below may be regularly detected by the sensors provided in the vehicle.

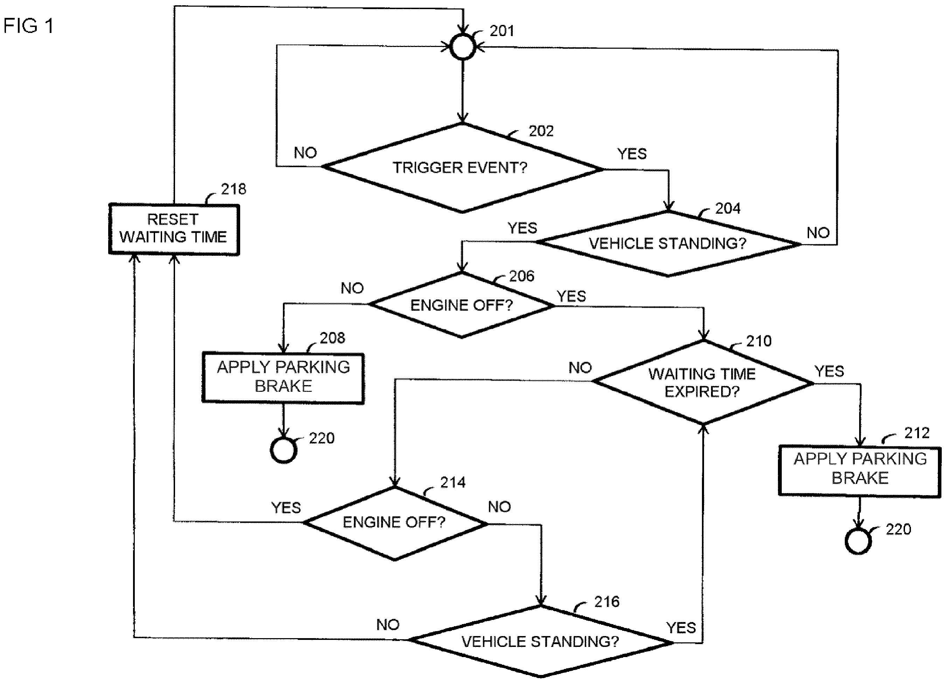

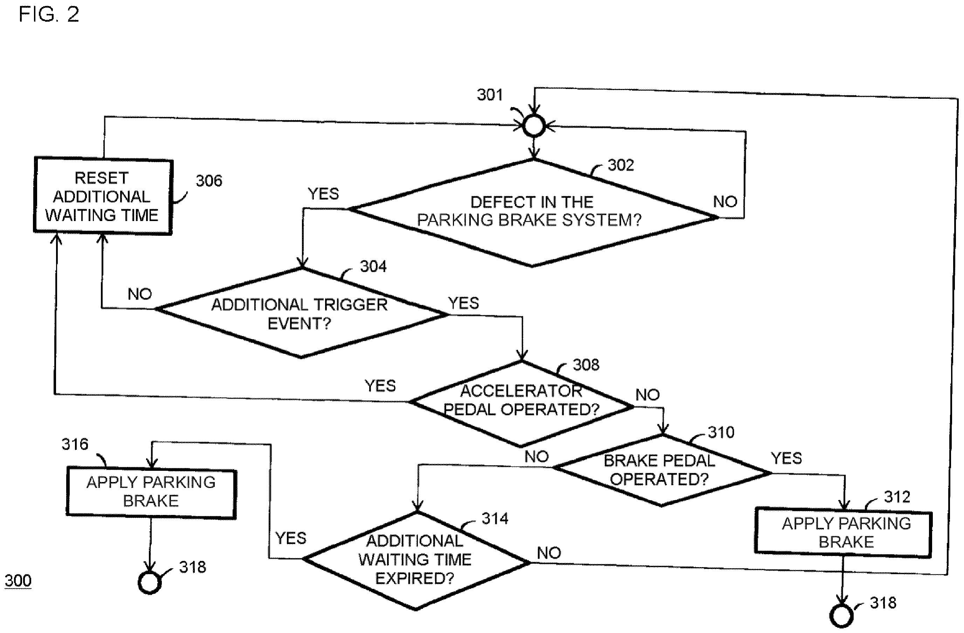

Figure 1 shows a flow chart of a method. The method 200 illustrated in Figure 1 may be capable of transferring an electrically operable parking brake system from a released operating state into an applied operating state. The method 200 may, for example, be implemented by a control device of the electrically operable parking brake system. The method 200 may start in Step 201. In Step 201, for example, conditions required for the implementation of the method 200 may be checked. For example, it may be checked whether a system parameter is set which prevents an implementation or a start of the method 200. Further, a check for detected/detectable defects may be performed, if possible. When a defect is detected, for example, a modified method illustrated in Figure 2 may be started. Further, a system parameter may be set which may prevent an implementation of the method 200 until the defect is removed. Starting from Step 201, Step 202 may be executed in which it may be checked whether a trigger event is present. The trigger event may, for example, of comprise one of the events listed below:
- ignition is turned off,
- cabin door of the vehicle 104 is locked from the outside,
- a key is removed from the ignition lock,
- driver of the vehicle 104 leaves the driver's seat,
- belt buckle is opened,
- engine of the vehicle 104 is turned off from the outside,
- a gear position "neutral" or "parking" is selected
- cabin door of the vehicle 104 is opened,
- a tachograph chart is removed from a tachograph of the vehicle 104,
- master switch is turned off,
- instruction to implement a levelling of the vehicle 104.

When a trigger event is not present - NO in Step 202 - the method 200 may be restarted in Step 201. When a trigger event is present - YES in Step 202 - the period of a predeterminable waiting time may be started, and the process can be continued with Step 204. In Step 204, it may be checked whether the vehicle is standing. When the vehicle is not standing - NO in Step 204 - the method 200 may also be restarted in Step 201. When the vehicle is standing - YES in Step 204 - the process can be continued with Step 206. In Step 206, it may be checked whether the engine of the vehicle, in particular, the drive engine of the vehicle, is deactivated. When the engine is not deactivated - NO in Step 206 - the process can be continued with Step 208. When the engine is deactivated - YES in Step 206 - the process can be continued with Step 210. In Step 208, the parking brake system may be applied. Further, a corresponding information signal indicating that the parking brake system is applied may be output in Step 208. The signal may comprise optical as well as acoustic components, in particular, an acoustic signal, the change of a signal lamp and/or written information indicating the application of the parking brake system on a display of an on-board computer. In Step 210, it may be checked whether a waiting time has expired. The predeterminable waiting time or the expiration of the predeterminable waiting time checked in Step 210 may, for example, have been started in Step 202 as a response to a detected trigger event. When the waiting time has expired - YES in Step 210 - the process can be continued with Step 212. In Step 212, analogous to Step 208, the parking brake may first be applied. Then, also analogous to Step 208, an information signal may be output. The method 200 may, starting from Steps 208 and 212 in which the parking brake system is respectively applied, be continued with Step 220. In Step 220, the method may end properly.

When the predeterminable waiting time has not yet expired - NO in Step 210 - the method 200 may be continued with Step 214. In Step 214, it may be checked again whether the engine is off. When the engine is not off - NO in Step 214 - the process can be continued with Step 216. When the engine is off - YES in Step 214 - the process can be continued with Step 218. In Step 216, it may be checked again whether the vehicle is standing. If the vehicle is standing - YES in Step 216 - the process can again be continued with Step 210 to again check whether the waiting time has expired. If the vehicle not is standing - NO in Step 216 - the process can be continued with Step 218. In Step 218, the predeterminable waiting time may be reset. If required, the waiting time or the remaining waiting time may be optically and/or acoustically indicated to the driver, for example, on a display of an on-board computer in the vehicle interior or by means of a variable acoustic signal.

If a defect in the parking brake system is detected, in particular, a defect of the operating device of the parking brake system and/or of an interface between the operating device and a control device of the electrically operable parking brake system, the modified method described below may be started. The detection of a defect may, for example, be intended as a required prerequisite during the start 201 of the method illustrated in Figure 1 prior to the implementation of the method 200.

Figure 2 shows a modified method. The modified method 300 illustrated in Figure 2 may start in Step 301. Starting from Step 301, the process can be continued with Step 302. In Step 302, it may be checked whether a defect of the parking brake system was detected. The defect may, in particular, be a defect of a control, i.e., of a manual operating device and/or of an interface between the operating device and a control device of the parking brake system. If no defect was detected - NO in Step 302 - the modified method 300 may be restarted in Step 301. If a defect of the parking brake system was detected - YES in Step 302 - the process can be continued with Step 304. In Step 304, it may be checked whether an additional trigger event has occurred. If no additional trigger event has occurred - NO in Step 304 - the process can be continued with Step 306. If the additional trigger event has occurred - YES in Step 304 - a period of a further predeterminable waiting time may be started or continued, and the process can be continued with Step 308. In Step 306, the further predeterminable waiting time period started in Step 302 may be reset. When Step 306 is completed, the modified method may be restarted in Step 301. In Step 308, it may be checked whether the accelerator pedal is operated. If the accelerator pedal is operated - YES in Step 308 - the process can be continued with Step 306. If the accelerator pedal is not operated - NO in Step 308 - the process can be continued with Step 310. In Step 310, it may be checked whether the brake pedal is operated. If the brake pedal is operated - YES in Step 310 - the process can be continued with Step 312. If the brake pedal is not operated - NO in Step 310 - the process can be continued with Step 314. In Step 312, the parking brake system may be applied. Further, an optical and/or acoustical signal may be output which notifies the driver of the vehicle of the application of the electrically operable parking brake system. The signal may, for example, comprise an acoustic signal, a changed signal lamp, and/or a written message on a display of an on-board computer in the vehicle interior. Following Step 312, the method 300 may end in Step 318. If the brake pedal is not operated - NO in Step 310 - it may be checked in Step 314 whether the additional waiting time has already expired. If the additional waiting time has not yet expired - NO in Step 314 - the modified method 300 may be continued with Step 301. If the additional waiting time has already expired - YES in Step 314 - the process can be continued with Step 316. In Step 316, the parking brake may, analogous to Step 312, be applied, and a corresponding signal may be output. Following Step 316, the method 300 may end in Step 318. If required, the additional waiting time or the remaining additional waiting time may be optically and/or acoustically indicated to the driver, for example, on a display of an on-board computer in the vehicle interior or by means of a variable acoustic signal.

The modified method 300 illustrated in Figure 2 may, for example, starting from the method 200 known from Figure 1, begin with Step 301, for example, periodically or if a check of the required preconditions in Step 201 is unsuccessful. Prior to a restart of the modified method in Step 300, an implementation of Step 201 of the method 200 shown in Figure 1 may periodically be provided, for example, to change between the modified method 300 and the method 200.

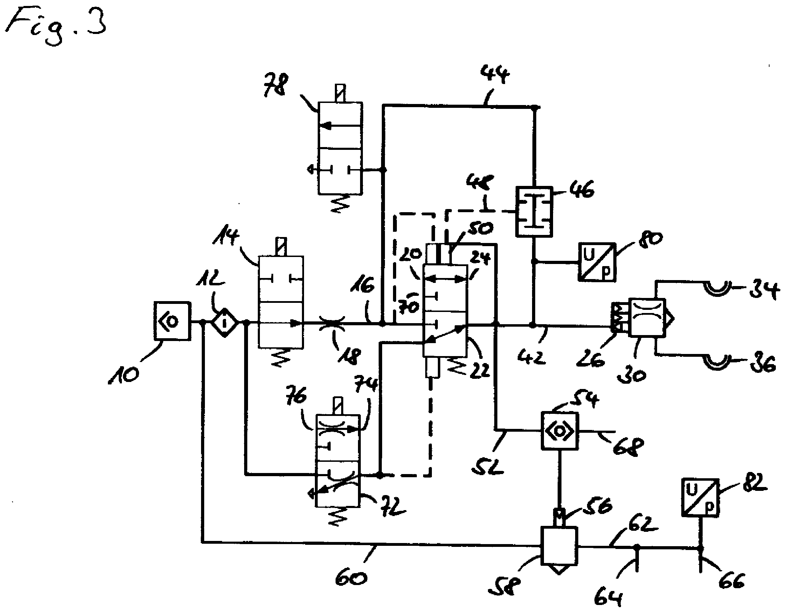

Figure 3 shows an exemplary circuit diagram of an electrically operable parking brake system. The illustrated electrically operable parking brake system 100 may be connected to a pressurised air processing system (not shown) via a non-return valve 10. The non-return valve 10 may be followed by an optional filter unit 12 through which the pressurised air may be supplied to a supply solenoid valve 14 which may be formed as a 2/2 directional valve. A first working connection 20 of a control valve device 22 may be connected to the outlet of the supply solenoid valve 14 via a supply line section 16 and an optional throttle 18. The control valve device 22 may be formed as a pneumatically controllable 3/2 directional valve. A second working connection 24 of the control valve device 22 may lead to a control inlet 26 of a trailer control module 30. It may operate a supply connection 34 and a control connection 36 of the trailer coupling. The trailer control line branches 42, 44 may be connected to inlets of a select low valve 46, the outlet of which may be connected to a control inlet 50 of the control valve device 22 via a control line 48. The select low valve 46 may function so that the lower inlet pressure, i.e., the lower pressure from the two trailer control line branches 42, 44, may be applied at its outlet, i.e., in the control line 48. The control line 48 may further be connected to a relay control inlet 56 of a relay valve 58 via a relay control line 52 and a shuttle valve 54. The relay valve 58 may be supplied with pressurised air from a location upstream of the supply solenoid valve 14 via a relay supply line 60. A relay outlet line 62 may lead to branch lines 64, 66 to which a spring energy store cylinder (not illustrated) may be connected. Further, a service brake line 68 may be connected to the shuttle valve 54. A connection 74 of a control and exhaust valve device 72 may be connected to a vent port 70 of the control valve device 22. A further port 76 of the control and exhaust valve device 72 may be supplied with pressurised air from a location between the filter unit 12 and the supply solenoid valve 14. Further, an exhaust solenoid valve 78 formed as a 2/2 directional valve may be provided which may be connected to the supply line section 16. Further, pressure sensors 80, 82 for detecting the pressures at the second working connection 24 of the control valve device 22 as well as the relay outlet line 62 may be provided. The pressure sensor 80 may, for example, measure a shift pressure of the electrically operable parking brake system 100. A supply pressure of the electrically operable parking brake system 100 may, for example, be determined by a pressure sensor (not shown) between the non-return valve 10 and the filter unit 12.

The electrically operable parking brake system 100 illustrated in Figure 3 may further comprise a first control device not illustrated in this figure and a manual operating device which is also not illustrated. The operating device may be connected to the first control device via an interface. The operating device may be designed for manually releasing and applying the parking brake system 100 as well as for manually initiating a trailer test function.

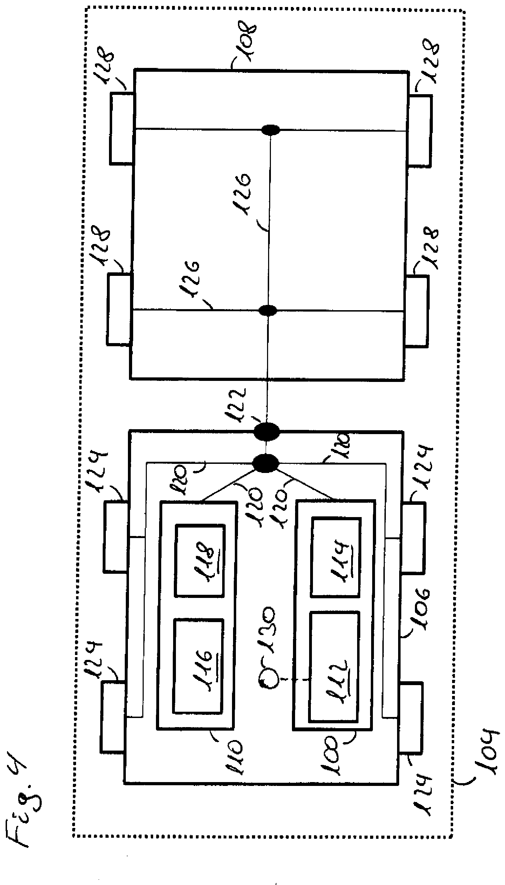

Figure 4 shows a schematic representation of a vehicle. Figure 4 schematically shows the vehicle 104 which may comprise a towing vehicle 106 and a trailer 108. The vehicle 104 may comprise an electrically operable parking brake system 100 and a service brake 110. The electrically operable parking brake system 100 may in turn comprise a first control device 112 and an electrically operable valve array 114 which may be controllable by the first control device 112. The electrically operable valve array 114 may, for example, be connected to or identified with the circuit diagram illustrated in Figure 3. The electrically operable parking brake system 100 may be coupled to at least one wheel brake 124 on at least one axle of the towing vehicle 106 via a pneumatic line 120. Further, the electrically operable parking brake system 100 may be connected to a pneumatic trailer connection 122 via the pneumatic line 120. The pneumatic trailer connection 122 may be identified with the trailer control module 30 or the control connection 36. Analogously, the service brake 110 may comprise a second control device 116 and a valve array 118. Further, the service brake 110 may also be connected to the at least one wheel brake 124 and the pneumatic trailer connection 122 via the pneumatic lines 120. In this connection, it is clear to a person skilled in the art that the pneumatic line 120 only suggests the pneumatic couplings between the service brake 110, the electrically operable parking brake system 100, the pneumatic trailer connection 122, and the wheel brakes 124, as, for example, a combination cylinder located in the area of the at least one wheel brake 124 comprises two independent pneumatic connections for the service brake 110 and the parking brake system which are independently coupled to the electrically operable parking brake system 100 and the service brake 110.

The trailer 108 may be pneumatically coupled to the trailer connection 122, wherein pneumatic control pressures may be transmitted to at least one trailer wheel brake 128 of the trailer 108 via at least one pneumatic line 126. In connection with the at least one trailer wheel brake 128, combination cylinders may also be provided to some extent so that the at least one pneumatic line 126, analogous to the pneumatic lines 120 of the towing vehicle 106, may illustrate existing couplings in a simplified manner.

The features of the invention disclosed in the above description, the drawings as well as the claims may be important for the realisation of the invention individually as well as in any combination.

### List of Numerals

- 10: non-return valve
- 12: filter unit
- 14: supply solenoid valve
- 16: supply line section
- 18: throttle
- 20: first working connection
- 22: control valve device
- 24: second working connection
- 26: control input
- 30: trailer control module
- 34: supply connection
- 36: control connection
- 42: trailer control line branch
- 44: trailer control line branch
- 46: select low valve
- 48: control line
- 50: control inlet
- 52: relay control line
- 54: shuttle valve
- 56: relay control input
- 58: relay valve
- 60: relay supply line
- 62: relay outlet line
- 64: branch line
- 66: branch line
- 68: service brake line
- 70: vent port
- 72: control and exhaust valve device
- 74: connection
- 76: connection
- 78: exhaust solenoid valve
- 80: pressure sensor
- 82: pressure sensor
- 100: electrically operable parking brake system
- 102: trailer test function
- 104: vehicle
- 106: towing vehicle
- 108: trailer
- 110: service brake
- 112: first control device
- 114: electrically operable valve array
- 116: second control device
- 118: valve array
- 120: pneumatic line
- 122: trailer connection
- 124: wheel brake
- 126: pneumatic line
- 128: trailer wheel brake
- 200: method
- 201: start
- 202: trigger event
- 204: vehicle standing?
- 206: engine off?
- 208: apply parking brake
- 210: waiting time expired?
- 212: apply parking brake
- 214: engine off?
- 216: vehicle standing?
- 218: reset waiting time
- 220: end
- 300: modified method
- 301: start
- 302: defect in the parking brake system?
- 304: additional trigger event?
- 306: reset additional waiting time
- 308: accelerator pedal operated?
- 310: brake pedal operated?
- 312: apply parking brake
- 314: additional waiting time expired?
- 316: apply parking brake
- 318: end

## Claims

1. A method (200) for operating an electrically operable parking brake system (100) of a vehicle (104), wherein a transfer of the electrically operable parking brake system (100) from a released operating state into an applied operating state is initiated and a predeterminable waiting time period is started when the presence of a trigger event is detected which is independent of an operating device (130) provided for manually operating the electrically operable parking brake system (100) and/or used to release the parking brake system (100) when an operating device (130) is faulty, **characterised in that** the electrically operable parking brake system (100) is transferred into the applied operating state after the expiration of the predeterminable waiting time when the vehicle (104) is standing and the engine is not started during the predeterminable waiting time, and **in that** the predeterminable waiting time is reset and/or interrupted when the engine is started or the vehicle (104) is rolling.

2. The method (200) according to claim 1, **characterised in that** the trigger event comprises at least one of the following events:
- ignition is turned off,
- cabin door of the vehicle (104) is locked from the outside,
- a key is removed from the ignition lock,
- driver of the vehicle (104) leaves the driver's seat,
- belt buckle is opened,
- engine of the vehicle (104) is turned off from the outside,
- a gear position "neutral" or "parking" is selected
- cabin door of the vehicle (104) is opened,
- a tachograph chart is removed from a tachograph of the vehicle (104),
- master switch is turned off,
- instruction to implement a levelling of the vehicle (104),
- the vehicle (104) is stopped.

3. The method (200) according to claim 1 or 2, **characterised in that** it is checked whether the vehicle (104) is standing.

4. The method (200) according to one of the preceding claims, **characterised in that** it is checked whether the engine is running and that the electrically operable parking brake system (100) is transferred into the applied operating state when the engine is running or stopped.

5. The method (200) according to one of the preceding claims, **characterised in that** the method (200) is terminated when at least one of the following events is detected:
- detection of the velocity of the vehicle (104) is not possible,
- receipt of a external instruction to terminate the method (200),
- detection that the electrically operable parking brake system (100) is already in the applied operating state,
- receipt of an ADR main switch signal is not possible in an ADR vehicle,
- detection of a stored control parameter for deactivating the method (200).

6. The method (200) according to one of the preceding claims, **characterised in that** a transfer of the electrically operable parking brake system (100) from a released operating state into an applied operating state is initiated and **in that** an additional predeterminable waiting time period is started when a defect of the electrically operable parking brake system (100) is detected and the presence of an additional trigger event is detected which is independent of the operating device (130) provided for manually operating the electrically operable parking brake system (100).

7. The method (200) according to claim 6, **characterised in that** the additional trigger event comprises at least one of the following events:
- detection of a vehicle speed which is lower than a predeterminable threshold value,
- recognizing that the engine not is running,
- a gear position "neutral" or "parking" is selected,
- receiving an external instruction to apply the electrically operable parking brake system,
- driver of the vehicle leaves the driver's seat.

8. The method (200) according to claim 6 or 7, **characterised in that** the electrically operable parking brake system (100) is transferred into the applied operating state after the expiration of the additional predeterminable waiting time when the additional trigger incident is detected between the start and an expiration of the additional predeterminable waiting time.

9. The method according to one of the claims 6 to 8, **characterised in that** the electrically operable parking brake system (100) is transferred into the applied operating state prior to an expiration of the additional predeterminable waiting time when a brake pedal of the vehicle (104) is operated.

10. The method according to one of the claims 6 to 9, **characterised in that** the additional predeterminable waiting time is reset and/or interrupted when an accelerator pedal of the vehicle (104) is operated.

11. A control device (112) of an electrically operable parking brake system (100) of a vehicle (104), wherein the control device (112) is designed for implementing a method according to one of the preceding claims.

## Patentansprüche

1. Verfahren (200) zum Betrieb einer elektrisch betätigbaren Feststellbremsanlage (100) eines Fahrzeugs (104), wobei ein Überführen der elektrisch betätigbaren Feststellbremsanlage (100) aus einem gelösten Betriebszustand in einen angezogenen Betriebszustand eingeleitet wird und eine vorgegebene Wartezeit beginnt, wenn das Vorliegen eines Auslöseereignisses festgestellt wird, das unabhängig von einer Betätigungsvorrichtung (130) ist, die zur manuellen Betätigung der elektrisch betätigbaren Feststellbremsanlage (100) vorgesehen ist und/oder zum Lösen der Feststellbremsanlage (100) vorgesehen ist, wenn eine Betätigungsvorrichtung (130) fehlerhaft ist, **dadurch gekennzeichnet, dass** die elektrisch betätigbare Feststellbremsanlage (100) nach Ablauf der vorgegebenen Wartezeit in den angezogenen Betriebszustand überführt wird, wenn das Fahrzeug (104) steht und der Motor während der vorgegebenen Wartezeit nicht angelassen wird, und dass die vorgegebene Wartezeit rückgestellt und/oder unterbrochen wird, wenn der Motor angelassen wird oder das Fahrzeug (104) rollt.

2. Verfahren (200) nach Anspruch 1, **dadurch gekennzeichnet, dass** das Auslöseereignis mindestens eines der folgenden Ereignisse umfasst:
- Zündung ist ausgeschaltet,
- Fahrerhaustür des Fahrzeugs (104) ist von außen versperrt,
- ein Schlüssel ist aus dem Zündschloss abgezogen,
- der Fahrer des Fahrzeugs (104) verlässt den Fahrersitz,
- Gurtschloss ist offen,
- Motor des Fahrzeugs (104) von außen abgeschaltet,
- Gang "Leerlauf oder "Parken" gewählt,
- Fahrerhaustür des Fahrzeugs (104) ist offen,
- ein Fahrtenschreiberdiagramm aus einem Fahrtenschreiber des Fahrzeugs (104) entfernt,
- Hauptschalter ausgeschaltet,
- Anweisung zu einer Nivellierung des Fahrzeugs (104),
- das Fahrzeug ist abgestellt.

3. Verfahren (200) nach Anspruch 1 oder 2, **dadurch gekennzeichnet, dass** geprüft wird, ob das Fahrzeug (104) steht.

4. Verfahren (200) nach einem der vorhergehenden Ansprüche, **dadurch gekennzeichnet, dass** geprüft wird, ob der Motor läuft, und dass die elektrisch betätigbare Feststellbremsanlage (100) bei laufendem oder abgestelltem Motor in den angezogenen Betriebszustand überführt wird.

5. Verfahren (200) nach einem der vorhergehenden Ansprüche, **dadurch gekennzeichnet, dass** das Verfahren (200) abgeschlossen wird, wenn mindestens eines der folgenden Ereignisse festgestellt wird:
- Erfassung der Geschwindigkeit des Fahrzeugs (104) nicht möglich,
- Empfang einer externen Anweisung zum Abschluss des Verfahrens (200),
- Feststellung, dass die elektrisch betätigbare Feststellbremsanlage (100) bereits im angezogenen Betriebszustand ist,
- Empfang eines ADR-Hauptschaltersignals in einem ADR-Fahrzeug nicht möglich,
- Erfassung eines gespeicherten Steuerparameters zur Deaktivierung des Verfahrens (200).

6. Verfahren (200) nach einem der vorhergehenden Ansprüche, **dadurch gekennzeichnet, dass** ein Überführen der elektrisch betätigbaren Feststellbremsanlage (100) aus einem gelösten Betriebszustand in einen angezogenen Betriebszustand eingeleitet wird, und dass eine zusätzliche vorgegebene Wartrzeit beginnt, wenn ein Fehler der elektrisch betätigbaren Feststellbremsanlage (100) festgestellt wird und das Vorliegen eines zusätzlichen Auslöseereignisses festgestellt wird, das unabhängig von der Betätigungsvorrichtung (130) ist, die zur manuellen Betätigung der elektrisch betätigbaren Feststellbremsanlage (100) vorgesehen ist.

7. Verfahren (200) nach Anspruch 6, **dadurch gekennzeichnet, dass** das zusätzliche Auslöseereignis mindestens eines der folgenden Ereignisse umfasst:
- Erfassung einer Fahrzeuggeschwindigkeit unter einem vorgebbaren Schwellenwert,
- Erkennung, dass der Motor nicht läuft,
- Gang "Leerlauf" oder "Parken" gewählt,
- Empfang einer externen Anweisung zum Anziehen der elektrisch betätigbaren Feststellbremsanlage,
- der Fahrer des Fahrzeugs verlässt den Fahrersitz.

8. Verfahren (200) nach Anspruch 6 oder 7, **dadurch gekennzeichnet, dass** die elektrisch betätigbare Feststellbremsanlage (100) nach Ablauf der zusätzlichen vorgebbaren Wartezeit in den angezogenen Betriebszustand überführt wird, wenn das zusätzliche Auslöseereignis zwischen dem Start und einem Ablauf der zusätzlichen vorgebbaren Wartezeit erfasst wird.

9. Verfahren nach einem der Ansprüche 6 bis 8, **dadurch gekennzeichnet, dass** die elektrisch betätigbare Feststellbremsanlage (100) vor einem Ablauf der zusätzlichen vorgebbaren Wartezeit in den angezogenen Betriebszustand überführt wird, wenn ein Bremspedal des Fahrzeugs (104) betätigt wird.

10. Verfahren nach einem der Ansprüche 6 bis 9, **dadurch gekennzeichnet, dass** die zusätzliche vorgebbare Wartezeit rückgestellt und/oder unterbrochen wird, wenn ein Gaspedal des Fahrzeugs (104) betätigt wird.

11. Steuereinrichtung (112) einer elektrisch betätigbaren Feststellbremsanlage (100) eines Fahrzeugs (104), wobei die Steuereinrichtung (112) zur Ausführung eines Verfahrens nach einem der vorhergehenden Ansprüche ausgelegt ist.

## Revendications

1. Procédé (200) pour faire fonctionner un système (100) de frein de parking pouvant être actionné électriquement d'un véhicule (104), dans lequel un transfert du système (100) de frein de parking pouvant être actionné électriquement d'un état de fonctionnement libéré dans un état de fonctionnement appliqué est initié et une durée d'attente qui peut être déterminée à l'avance est démarrée lorsque la présence d'un événement de déclenchement est détectée qui est indépendant d'un dispositif (130) de fonctionnement prévu pour faire fonctionner manuellement le système (100) de frein de parking pouvant être actionné électriquement et/ou utilisé pour libérer le système (100) de frein de parking lorsqu'un dispositif (130) de fonctionnement est défectueux, **caractérisé en ce que** le système (100) de frein de parking pouvant être actionné électriquement est transféré dans l'état de fonctionnement appliqué après l'expiration de la durée d'attente qui peut être déterminée à l'avance lorsque le véhicule (104) est à l'arrêt et que le moteur n'est pas démarré pendant la durée d'attente qui peut être déterminée à l'avance et **en ce que** la durée d'attente qui peut être déterminaée à l'avance est réinitialisée et/ou interrompue lorsque le moteur est démarré ou que le véhicule (104) roule.

2. Procédé (200) suivant la revendication 1, **caractérisé en ce que** l'événement de déclenchement comporte au moins l'un des événements suivants :
- le démarreur est coupé,
- une porte de l'habitacle du véhicule (104) est verrouillée de l'extérieur,
- une clé est retirée du verrou de démarreur,
- le conducteur du véhicule (104) quitte le siège conducteur,
- la boucle de la ceinture de sécurité est ouverte,
- le moteur du véhicule (104) est mis à l'arrêt de l'extérieur,
- une position d'embrayage neutre ou « parking » est sélectionnée,
- une porte de l'habitacle du véhicule (104) est ouverte,
- un graphique de tachygraphe est retiré d'un tachygraphe du véhicule (104),
- le commutateur maître est mis à l'état bloqué,
- une instruction de mettre en œuvre une mise à niveau du véhicule (104),
- le véhicule (104) est arrêté.

3. Procédé (200) suivant la revendication 1 ou 2, **caractérisé en ce qu'**il est vérifié si le véhicule (104) est à l'arrêt.

4. Procédé (200) suivant l'une quelconque des revendications précédentes, **caractérisé en ce qu'**il est vérifié si le moteur tourne et **en ce que** le système (100) de frein de parking pouvant être actionné électriquement est transféré à l'état de fonctionnement appliqué lorsque le moteur tourne ou est arrêté.

5. Procédé (200) suivant l'une quelconque des revendications précédentes, **caractérisé en ce que** le procédé (200) est terminé lorsqu'au moins l'un des événements suivants est détecté :
- la détection de la vitesse du véhicule (104) n'est pas possible,
- réception d'une instruction externe de terminer le procédé (200),
- détection que le système (100) de frein de parking pouvant être actionné électriquement est déjà à l'état de fonctionnement appliqué,
- la réception d'un signal de commutateur principal ADR n'est pas possible dans un véhicule ADR,
- détection d'un paramètre de commande mémorisé pour désactiver le procédé (200).

6. Procédé (200) suivant l'une quelconque des revendications précédentes, **caractérisé en ce qu'**un transfert du système (100) de frein de parking pouvant être actionné électriquement d'un état de fonctionnement libéré en un état de fonctionnement appliqué est initié et **en ce qu'**une durée de temps d'attente pouvant être déterminée à l'avance est démarrée lorsqu'un défaut du système (100) de frein de parking pouvant être actionné électriquement est détecté et il est détecté la présence d'un événement de déclenchement supplémentaire qui est indépendant du dispositif (130) de fonctionnement prévu pour faire fonctionner manuellement le système (100) de frein de parking pouvant être actionné électriquement.

7. Procédé (200) suivant la revendication 6, **caractérisé en ce que** l'événement de déclenchement supplémentaire comporte au moins l'un des événements suivants :
- détection d'une vitesse du véhicule qui est inférieure à une vitesse seuil qui peut être déterminée à l'avance,
- reconnaissance que le moteur ne tourne pas,
- une position d'embrayage « neutre » ou « en parking » est sélectionnée,
- réception d'une instruction externe d'appliquer le système de frein de parking qui peut être actionné électriquement,
- le conducteur du véhicule quitte le siège conducteur.

8. Procédé (200) suivant la revendication 6 ou 7, **caractérisé en ce que** le système (100) de frein de parking qui peut être actionné électriquement est transféré dans l'état de fonctionnement appliqué après l'expiration de la durée d'attente qui peut être déterminée à l'avance supplémentaire lorsque l'incident de déclenchement supplémentaire est détecté entre le début et une expiration de la durée d'attente qui peut être déterminée à l'avance supplémentaire.

9. Procédé suivant l'une quelconque des revendications 6 à 8, **caractérisé en ce que** le système (100) de frein de parking qui peut être actionné électriquement est transféré à l'état de fonctionnement appliqué avant une expiration de la durée d'attente qui peut être déterminée à l'avance supplémentaire lorsqu'une pédale de frein du véhicule (104) est actionnée.

10. Procédé suivant l'une quelconque des revendications 6 à 9, **caractérisé en ce que** la durée d'attente qui peut être déterminée à l'avance supplémentaire est réinitialisée et/ou interrompue lorsqu'une pédale d'accélérateur du véhicule (104) est actionnée.

11. Dispositif (112) de commande d'un système (100) de frein de parking qui peut être actionné électriquement d'un véhicule (104), dans lequel le dispositif (112) de commande est conçu pour mettre en œuvre un procédé suivant l'une quelconque des revendications précédentes.
